# EUROPEAN PATENT SPECIFICATION

(11) **EP 3 545 758 B1**
(45) Date of publication and mention of the grant of the patent: **17.02.2021**
(21) Application number: 18163980.8
(22) Date of filing: 26.03.2018
(51) Int. Cl.: A01M 7/00

(54) **BOOM MOUNTING ASSEMBLY**
AUSLEGERMONTAGEANORDNUNG
ENSEMBLE DE MONTAGE DE FLÈCHE

(43) Date of publication of application: 02.10.2019
(73) Proprietor: Kverneland Group Nieuw-Vennep BV, 2153 LR Nieuw-Vennep (NL)
(72) Inventor: Vedder, Gert-Jan, 2461 GH Ter Aar (NL)
(74) Representative: Bittner, Thomas L.

(56) References cited:
- GB-A- 2 153 194
- US-A- 4 784 324
- US-B1- 6 343 661

## Description

The present disclosure refers to a boom mounting assembly for attachment to an agricultural machine.

### Background

For dispensing spray material, such as pesticides, herbicides, fungicides or fertilizer, on a field, an application machine may be provided. For example, a tractor may be equipped with an application machine with a boom from which such spray material is dispensed, for example via nozzles attached to the boom. Alternatively, a self-contained application machine may be provided with a boom from which spray material is dispensed.

To ensure uniform dispensing and avoid damage to the boom, the boom may be equipped with a balance system for balancing the boom in a desired position, for example a horizontal position. For this, a movement of the boom relative to other components of the application machine may be permitted. In some circumstances, such as when the ground the spray material is dispensed onto is inclined, it may be desirable to balance the boom in a non-horizontal position.

A boom mounting assembly for attachment to an agricultural application machine is disclosed in document EP 2 403 331 A1. The assembly comprises a boom support frame which is suspended from a primary frame mounted to a chassis. The boom support frame comprises a transverse beam for supporting an intermediate section of a fluid application boom. The suspension mechanism allows both yaw and pitch of boom support frame relative to the primary frame resulting from fore and aft forces on the boom. Dampers are each connected between the primary frame and the boom support frame at a position spaced from the transverse center of the assembly. Damping of pitch and asymmetrical yaw movement of the transverse beam away from a neutral position is controlled by the first and second dampers.

### Summary

It is an object of the present disclosure to provide a boom mounting assembly for attachment to an agricultural machine for which improved stability and performance in operation is provided.

For solving the object, a boom mounting assembly for attachment to an agricultural machine according to claim 1 is provided. Further embodiments are the subject of dependent claims.

According to an aspect, a boom mounting assembly for attachment to an agricultural machine is provided. The boom mounting assembly comprises a primary frame and a boom support frame configured to support a boom and suspended from the primary frame such that the boom support frame can pivot at least in a transverse plane around a longitudinal axis of rotation provided in a pivot point. At least one bearing assembly is provided on the primary frame or the boom support frame, which is configured for guiding a movement of the boom support frame relative to the primary frame. The at least one bearing assembly comprises a bearing member which defines a bearing surface which is configured to rest detachably against the other one of the primary frame and the boom support frame or a boom section of the boom. The bearing surface is convexly curved in any direction in the transverse plane.

The convexly curved shape of the bearing surface can improve stability of a boom mounting assembly and may help in balancing a boom mounted on the boom mounting assembly because it allows a movement with more degrees of freedom. In particular, the bearing assembly allows movement of the boom support frame relative to the primary frame in any direction in the transverse plane. In other words, the bearing member having a convexly curved bearing surface as described above not only allows for movement of the beam support frame in one direction, e.g. horizontal direction, but allows movement also in another direction relative to the primary frame, e.g. a vertical direction. This is particularly advantageous compared to a bearing member which is formed e.g. by a roller member having a cylindrical bearing surface, wherein the direction of movement is predetermined by the orientation of the roller member.

More than one bearing assemblies may be provided locally for forming a local arrangement of bearing assemblies. For example, a pair of bearing assemblies may be provided. For the plurality of bearing assemblies provided in a local arrangement, the bearing assemblies may be arranged side by side on a horizontal or a vertical line. More than one local arrangement of bearing assemblies may be provided.

The bearing assembly may form a roller bearing, which may improve bearing properties compared to a slide bearing or friction bearing. In particular, a roller bearing may be advantageous with respect to the movement as such because it has less resistance. Furthermore, a roller bearing may help to reduce wear of the bearing surface.

The bearing member may be a ball member having a substantially spherical surface, and the bearing surface is defined by at least a portion of the spherical surface of the ball member. A spherical surface is symmetrical in any direction such that movement of the boom support frame and the primary frame can be equally possible in any direction in the transverse plane.

The bearing assembly may comprise a biasing member which is configured to bias the bearing member in a direction transverse, preferably perpendicular, to the transverse plane. The biasing member may be a spring member, such as a coil spring. However, any other suitable biasing member may be chosen. The provision of the biasing member allows to resiliently support the bearing member such that the bearing surface may rest against a counter surface against the force of the biasing member. This may reduce mechanical loads on the bearing member because the biasing member can dampen movements of the bearing member in a direction transverse to the transverse plane. Furthermore, differences in the distance between the primary frame and the boom support frame or boom can be leveled out, in particular if more than one bearing assembly is provided. Providing a biased bearing member also adds one degree of freedom of the boom support frame relative to the primary frame in a direction transverse to the transverse plane.

The biasing member may be configured to protect the bearing member, e.g. the ball member, from damage when it is overloaded. It may prevent the bearing member or the bearing-housing to break when overloaded.

The bearing assembly may comprise a housing in which the bearing member is received. In particular, the bearing member may be freely rotatable in the housing in any direction about a center of rotation. If the bearing member is a spherical ball member, the center of rotation may be the center of the ball member. If the bearing member is spring-biased, a spring member or other biasing member may be arranged in the housing to support the bearing member. The biasing member is preferably configured not to interfere with the rotating characteristics of the bearing member. Providing the housing with the bearing member and possibly a biasing member allows to provide a bearing unit, which can be easily handled and attached to the boom mounting assembly.

The bearing member may be received in the housing such that it extends through and out of an opening in the housing. A portion of a surface of the bearing member which extends out of the opening may then form the bearing surface. For instance, the housing may have a circular opening having a smaller diameter than the bearing member such that a portion of the spherical surface extends through the opening and protrudes from the housing to be able to rest against a counter surface. The opening may be defined by a retaining member for the bearing member, such as a retaining ring or locking ring, also known as Seeger ring. The housing may be cylindrical, wherein the opening may be disposed in a front surface of the cylindrical housing. In particular, the housing may be formed by a tubular member with a retaining ring to hold the bearing member in the housing.

The boom mounting assembly may comprise at least two of the bearing assemblies which can be arranged in pairs. In particular, the bearing surfaces of the bearing members of one pair may face in opposite directions with respect to the transverse plane. Further, the beam mounting assembly may comprise at least three of the bearing assemblies, one of the bearing assemblies being arranged in an upper section of the primary frame, and two of the bearing assemblies being arranged in a lower section of the primary frame. The bearing assemblies may be arranged in a triangular arrangement, which is symmetrical with respect to a central vertical axis of the primary frame. In a preferred embodiment, the boom mounting assembly may comprise six bearing assemblies arranged in pairs, more specifically three pairs of bearing members in a triangular arrangement. It will be appreciated that any number, arrangement and grouping of bearing assemblies may be envisioned.

The at least one bearing assembly may be arranged in the primary frame and rests against a surface of the boom support frame or a section of the boom. The at least one bearing assembly may be fixedly attached to the primary frame. The surface of the boom support frame or the boom section, which may be referred to as counter surface, may be substantially flat. Advantageously, the counter surface is sufficiently large to allow movement of the bearing surface on the counter surface within a desired range. A flat surface allows the convexly shaped bearing surface to move freely in any direction in the transverse plane. Generally, it is advantageous if the bearing surface rests against a flat surface facing the bearing member. Alternatively, the counter surface may be non-flat, e.g. curved, to define a desired direction of movement of the boom support frame relative to the primary frame.

The bearing member may be made of a metal or metal alloy, e.g. steel. Alternatively, the bearing member may be made of plastics, such as e.g. thermoplastic material such as thermoplastic polyurethane. In an embodiment, the bearing member may be made of ultra-high-molecular-weight polyethylene (UHMWPE). Alternatively, the bearing member may be made of nylon or a polyamide different than nylon. As a further alternative, the bearing member may be made of a non-polyamide material such as a different polymer, rubber or any other suitable material.

The boom support frame may comprise a first sub-frame connecting to the primary frame, a second sub-frame supported by the first sub-frame in support sections provided, in a transverse direction, on opposite sides of the pivot point, and an actuator connecting to the first and second sub-frames. The actuator is operable such that the support sections can be moved relative to the pivot point, thereby, in a transverse direction increasing a distance between the pivot point and a support section on one side of the pivot point and, at the same time, decreasing a distance between the pivot point and a support section on an opposite side of the pivot point and vice versa.

According to the technologies proposed herein, the second sub-frame may be supported by the first sub-frame in support sections. The support sections may be one or more support points or areas in which the second sub-frame is supported by the first sub-frame. When the support sections are moved relative to the pivot point, the support sections may also move relative to the first and / or the second sub-frame. For example, the support sections may be two points of contact between the first sub-frame and the second sub-frame, the points of contact being fixed on the second sub-frame while they move along the first sub-frame when the actuator is operated to move the support sections relative to the pivot point. Alternatively or additionally, the support sections may move relative to subcomponents of the first and / or the second sub-frame but remain fixed relative to the sub-frame as a whole. For example, a separate component of the sub-frame may move relative to the sub-frame and a support section may move along the moving subcomponents while it stays fixed relative to the sub-frame as such. At the points of contact between the first sub-frame and the second sub-frame, corresponding support sections on the first sub-frame and the second sub-frame, respectively, may be provided.

The boom mounting assembly may further comprise a transversely extending frame member, first support sections provided on the transversely extending frame member on both of the opposite sides of the pivot point. The support sections may comprise one or more support points on the transversely extending frame member on each of the opposing sides of the pivot point. The transversely extending frame member may be provided with a hollow profile. For example, the transversely extending frame member may be provided with a square cross-section. Alternatively or additionally, the transversely extending frame member may be provided with a non-hollow profile. For example, the profile may be in the form of a T-beam or an I-beam. The transversely extending frame member may comprise different profiles. For example, the transversely extending frame member may comprise a hollow profile, in sections, and a non-hollow profile, in different sections.

The first sub-frame may be provided with the transversely extending frame member. Alternatively, the second sub-frame may be provided with the transversely extending frame member.

The boom mounting assembly may further comprise support members, the support members providing second support sections on both of the opposite sides of the pivot point and being supported on the transversely extending frame member such that the support members can be moved relative to the transversely extending frame in transverse direction by the actuator. The second support sections may correspond to the first support sections in points of contact between the first sub-frame and the second sub-frame.

One or more support members may be provided on each of the opposite sides of the pivot point. An equal number of support members may be provided on each of the opposite sides of the pivot point. Alternatively, the number of support members provided on one side of the pivot point may be different from the number of support members provided on the opposite side of the pivot point.

In a neutral position of the support sections relative to the pivot point, the respective distance between the pivot point and the support members on each of the opposite sides of the pivot point may be equal. In particular, in embodiments in which more than one support member is provided on each side of the pivot point, the distance between the pivot point and corresponding support members on each of the opposite sides of the pivot point may be equal. In the neutral position, the center of mass of all components suspended from the primary frame may lie vertically below the pivot point. A boom supported by the boom support frame may freely balance in a horizontal position when the support sections are in the neutral position. The support members may be provided on the second sub-frame. In embodiments, the first sub-frame is provided with the transversely extending frame member and the support members are provided on the second sub-frame. Alternatively, the support members may be provided on the first sub-frame. In embodiments, the second sub-frame is provided with the transversely extending frame member and the support members are provided on the first sub-frame.

The support members may comprise a roller provided on at least one side of the pivot point. Rollers may be provided on each of the opposite sides of the pivot point. On each of the opposite sides of the pivot point, one or more rollers may be provided. The embodiments described with regard to the roller may apply to each or all of the one or more rollers. Each roller may provide at least one support point. A plurality of support points between the first and the second sub-frame may be provided by a plurality of rollers.

The roller may be pivotably supported on the second sub-frame. Alternatively, when the support members are provided on the first sub-frame, the roller may pivotably supported on the first sub-frame. The roller may be supported in a freely rotating manner. The transversely extending frame member may provide a rolling surface on which the roller is supported.

The roller may be provided with a curved surface such as a semicircle shaped surface. Friction may be further reduced.

The support members may each comprise a twin roller assembly. Thereby, one support member may be provided on each of the opposite sides of the pivot point and each of the support members may comprise two rollers in a twin roller assembly.

The roller may be a plastic roller. The plastic roller is made of a plastic material, e.g. thermoplastic material such as thermoplastic polyurethane. In an embodiment, the roller may be made of ultra-high-molecular-weight polyethylene (UHMWPE). Alternatively, the roller may be made of nylon or a polyamide different than nylon. As a further alternative, the roller may be made of a non-polyamide material such as a different polymer, a metal, a metal alloy, rubber or any other suitable material.

The roller may be supported on one of a rolling bearing and a sliding bearing. The rolling bearing may be a ball bearing. The rolling bearing may be made of metal, at least in parts. For example, the rolling bearing may be a steel ball bearing. The roller may be supported on more than one bearing. For example, the roller may be supported on two steel ball bearings. Alternatively, the roller may be supported by a slide bearing.

The boom mounting assembly may further comprise a control unit functionally connected to the actuator such that the actuator can be operated by control signals provided by the control unit. The control signals may be generated in dependence on measurement signals, for example measurement signals that are indicative of an inclination angle of the ground.

In an exemplary embodiment, when the boom is freely balancing in a horizontal position and, based on sensor signals, an inclination of the ground is determined, the actuator is operated by control signals to move the support sections relative to the pivot point such that the center of gravity of all components suspended from the primary frame shifts and the boom matches the inclination of the ground. The sensor signals may be, for example, sensors indicative of a respective distance of opposite distal ends of the boom to the ground.

The control unit may be provided in a control system. For example, the control unit may be provided in an ISOBUS system such as a machine control network implementing the ISO 11683-11 standard.

The actuator may be extended and retracted to move the support sections relative to the pivot point. For example, the actuator may comprise a hydraulic cylinder and to move the support sections relative to the pivot point, the piston of the hydraulic cylinder may be extended out of the barrel of the hydraulic cylinder and / or the piston may be retracted into the barrel.

The pivot point may be provided with a ball joint. For example, the first sub-frame may be provided with a ball joint which rests on an axle extending from the primary frame whereby the boom support frame is suspended from the primary frame. The ball joint may enable at least some rotational movement around more than one axis passing through the pivot point.

The boom support frame may comprise pendulums on opposite sides. The boom may be suspended from the pendulums. For example, two pendulums may be provided on opposite sides of the second sub-frame and the boom may be suspended from the pendulums. The pendulums may provide quick stabilization. For example quick stabilization of the boom may be provided after a rocking movement caused by an agricultural machine comprising the boom mounting assembly moving over an obstacle such as a rock on the ground.

The primary frame may be configured to be mounted on a chassis, for example a chassis of an agricultural machine. In embodiments, the primary frame may be mounted to a lifting device configured to move the boom supported on the boom mounting assembly up and down for different modes of operation on the field and / or for transport. In such embodiments, the primary frame may also be referred to as a lifting frame.

The boom mounting assembly may be attached to an agricultural machine which may be mounted, for example, to an implement, a self-driving vehicle or a tractor. Alternatively, the agricultural machine may be self-contained, i.e. need not be mounted to another device. The agricultural machine may be a crop sprayer, for example. The agricultural machine may be configured to move over ground or soil, such as a field, to dispense a spray material onto the ground or soil. Dispensing the spray material onto the ground may comprise dispensing the spray material onto the soil or ground, for example of a field, or onto plants growing thereon. The spray material to be dispensed may, for example, be a pesticide, a fungicide, an herbicide or a fertilizer to be sprayed onto the soil.

The agricultural machine may be an agricultural application machine, for example, configured to move over ground or soil, such as a field, for dispensing a spray material onto the ground or soil. The agricultural application machine may be a sprayer. A plurality of application elements may be provided on the boom. The application elements may comprise a nozzle provided on the boom and configured to dispense the spray material.

Dispensing the spray material onto the ground may comprise dispensing the spray material onto the soil or ground, for example of a field, or onto plants growing thereon. The spray material to be dispensed may, for example, be a pesticide, a fungicide, an herbicide or a fertilizer to be sprayed onto the soil.

### Description of further embodiments

Following, embodiments, by way of example, are described with reference to figures. In the figures show:
- Fig. 1: a boom support frame;
- Fig. 2: a boom mounting assembly supporting a middle section of a boom;
- Fig. 3: a schematic representation of a boom mounting assembly supporting a boom in a neutral position;
- Fig. 4: a schematic representation of a boom mounting assembly supporting a boom in an inclined position;
- Fig. 5: a schematic representation of a boom mounting assembly supporting a boom in a different inclined position;
- Fig. 6: a schematic representation of elements of a boom mounting assembly;
- Fig. 7: a schematic representation of elements of a boom mounting assembly;
- Fig. 8: a schematic representation of a bearing assembly; and
- Fig. 9: a schematic representation of a bearing assembly viewed in a cross-section.

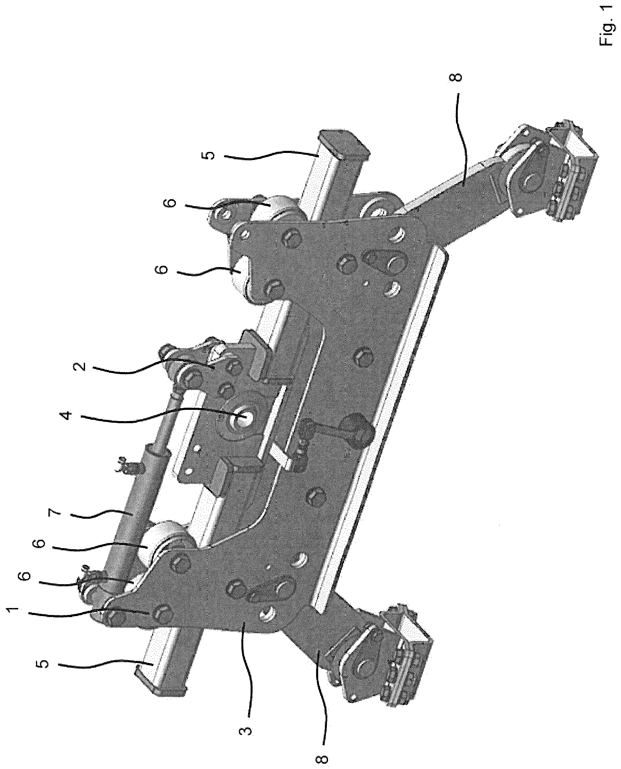

Fig. 1 shows a boom support frame 1. The boom support frame 1 comprises a first sub-frame 2 and a second sub-frame 3. The first sub-frame 2 is provided with a ball joint 4 which defines a pivot point of the boom support frame 1. The boom support frame 1 may rotate or pivot in a transverse plane perpendicular to a longitudinal axis defined by the main axis of the ball joint 4. The first sub-frame 2 further comprises a transversely extending frame member 5. The transversely extending frame member 5 comprises a left and a right profile on opposite sides of the ball joint 4. The left and the right profile are each provided with a square cross-section.

Rollers 6 are mounted to the second sub-frame 3 on steel ball bearings (not shown) such that the rollers 6 may freely rotate around a main axis of each roller 6. One twin roller assembly consisting of two rollers 6 is provided on the opposite sides of the ball joint 4. In alternative embodiments, different configurations of rollers 6 may be provided. For example one or more than two rollers 6 may be provided on the opposite sides of the ball joint 4 and / or a different number of rollers 6 may be provided on each of the opposite sides.

The rollers 6 may be plastic rollers made of a plastic material, e.g. thermoplastic material such as thermoplastic polyurethane. In an embodiment, the rollers 6 may be made of ultra-high-molecular-weight polyethylene (UHMWPE). Alternatively, the rollers 6 may be made of nylon or a polyamide different than nylon. As a further alternative, the rollers 6 may be made of a non-polyamide material such as a different polymer, a metal, a metal alloy, rubber or any other suitable material.

The second sub-frame 3 is supported by the first sub-frame 2 by the rollers 6 resting on the transversely extending frame member 5. The rollers 6 may roll along the respective upper surface of the profiles, thereby allowing a transverse movement of the second sub-frame 3 relative to the first sub-frame 2 along the extension of the transversely extending frame member 5. As the rollers 6 and the transversely extending frame member 5 will deform, at least minimally, under a load caused by the gravitational force, an area of contact is defined between each of the rollers 6 and the transversely extending frame member 5. These areas of contact provide support of the second sub-frame 3 on the first sub-frame 2 and may therefore be referred to as support sections. Herein, the areas of contact on the transversely extending frame member 5 may be referred to as first support sections and the areas of contact on the rollers 6 may be referred to as second support sections. When the second sub-frame 3 moves relative to the first sub-frame 2 along the transversely extending frame member 5, the rollers 6 rotate and move along on the respective upper surfaces of the transversely extending frame member 5 such that the area of contact between each roller 6 and the transversely extending frame member 5 moves on the upper surface of the transversely extending frame member 5 as well as on the circumferential surface of the roller 6. Thereby, the first support sections move on the upper surfaces of the profiles of the transversely extending frame member 5 and the second support sections move on the circumferential surface of the roller 6. At the same time, the second support sections do not move relative to the second sub-frame 3 as a whole.

The rollers 6 may be mounted on other bearings that steel ball bearings, for example on roller bearings or needle bearings. Different bearings may be used for each roller 6. Alternatively, a slide bearing may be applied.

An actuator 7 comprising a hydraulic cylinder connects the first sub-frame 2 and the second sub-frame 3. The actuator 7 may be extended, by extending the piston of the hydraulic cylinder out of the barrel of the hydraulic cylinder, and retracted, by retracting the piston of the hydraulic cylinder into the barrel of the hydraulic cylinder. By extending and retracting the actuator 7, the second sub-frame 3 is moved relative to the first sub-frame 2 in a transverse direction by way of the rollers 6 rolling along the respective upper surface of the profiles of the transversely extending frame member 5. Thereby, the support sections are moved relative to the ball joint 4 and the distance along the transversely extending frame member 5 between the ball joint 4 and the support sections on one side of the ball joint 4 is extended while, at the same time, the distance along the transversely extending frame member 5 between the ball joint 4 and the support sections on the opposite side of the ball joint 4 is lowered. In the embodiment shown in Fig. 1, when the actuator 7 is extended, the rollers 6 on the left side, and thus the support sections on the left side, of the ball joint 4 move away from the ball joint 4 and the rollers 6 on the right side, and thus the support sections on the right side, of the ball joint 4 move closer to the ball joint 4. When the actuator 7 is retracted, the rollers 6 on the right side, and thus the support sections on the right side, of the ball joint 4 move away from the ball joint 4 and the rollers 6 on the left side, and thus the support sections on the left side, of the ball joint 4 move closer to the ball joint 4.

In the embodiment shown, actuator 7 comprises a hydraulic cylinder. In alternative embodiments, the actuator 7 may comprise any other suitable component for achieving a movement between the first 2 and second 3 sub-frames. For example, actuator 7 may comprise an electric motor.

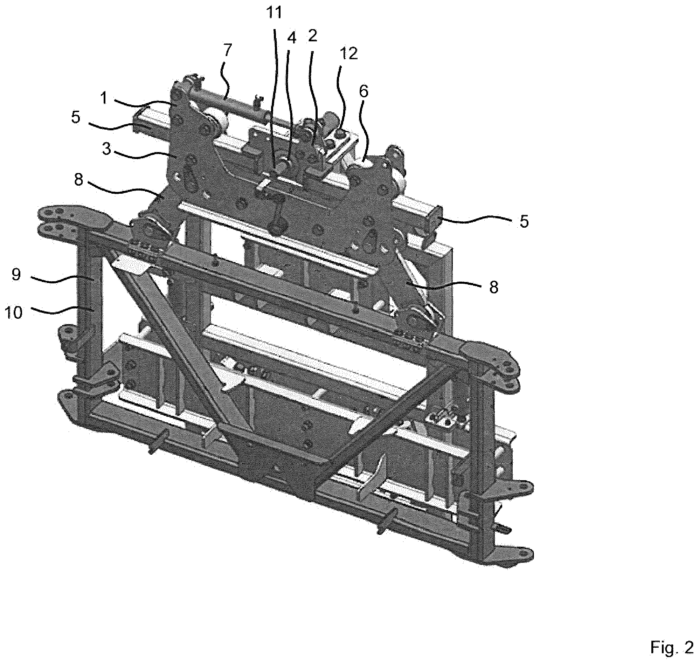

The boom support frame 1 further comprises pendulums 8 connected to the second sub-frame 3 on opposite sides. Fig. 2 shows a boom mounting assembly supporting a middle section 9 of a boom 10. The middle section 9 is suspended from the pendulums 8 connected to the second sub-frame 3. The ball joint 4 of the first sub-frame 2 of the boom support section 1 is mounted on an axle 11 of a primary frame 12. The axis of the axle 11 coincides with the main axis of the ball joint 4 and passes through the pivot point around which the boom support frame 1 may rotate in a transverse plane perpendicular to the coinciding axes of the axle 11 and the ball joint 4.

The primary frame 12 may be mounted to an agricultural machine, thereby mounting the boom 10 to the agricultural machine using the boom mounting assembly. By the boom support frame 1 rotating around the pivot point in the transverse plane relative to the primary frame 12, the boom 10 may be balanced, for example when the primary frame 12 moves due to movement of the agricultural machine. Additionally, the ball joint 4 allows limited rotation of the boom support frame 1 relative to the primary frame 12 other than a rotation in the transverse plane around the coinciding axes of the ball joint 4 and the axle 11. The axis of the axle 11 may be parallel to a longitudinal axis of the agricultural machine and / or a direction of movement of the agricultural machine at least in a neutral position of primary frame 12 with regard to the agricultural machine.

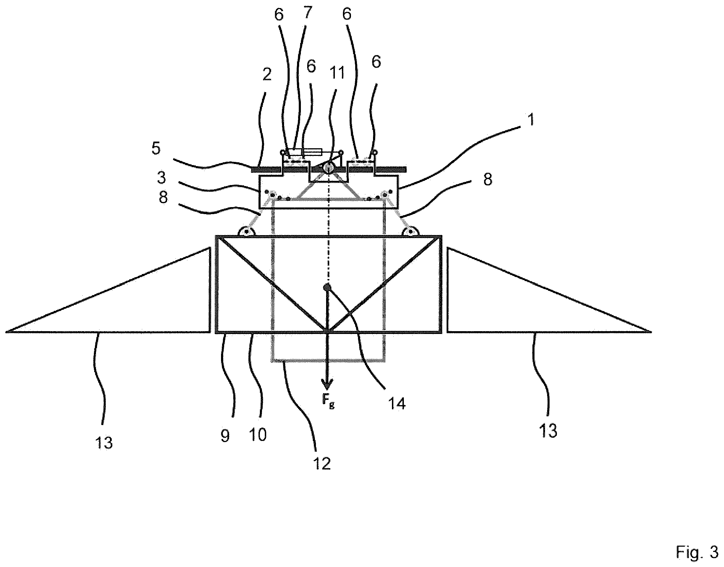

Fig. 3 shows a schematic representation of a boom mounting assembly supporting a boom 10. The boom 10 comprises a middle section 9 and outer sections 13 connected to the middle section 9. In Fig. 3, the boom support frame 1 in a neutral position in which each of the support sections on one side of the pivot point defined in the plane of view of Fig. 3 by the axle 11 has the same distance to the pivot point as the respective support section on the opposite side of the pivot point. The combined center of mass 14 of all components supported on the axle 11 lies vertically below the pivot point. Thereby, when free rotation of the boom support frame 1 around the axle 11 is possible, the boom 10 is balanced in a horizontal position, for example when the primary frame 12 moves out of a horizontal position because the agricultural machine moves over an inclined area of ground.

Balancing of the boom 10 in a horizontal position may be desired when the center of the agricultural machine, for example wheel of the agricultural machine, moves over an inclined area of ground while the overall area of ground covered by the boom, defined by the width of the boom from the tip of one outer section 13 to the other outer section 13, extends essentially horizontally. On the other hand, when the overall area of ground covered by the boom 10 is inclined, it may be desirable to balance the boom 10 in an inclined position, even when the center of the agricultural machine moves over a horizontal area of ground.

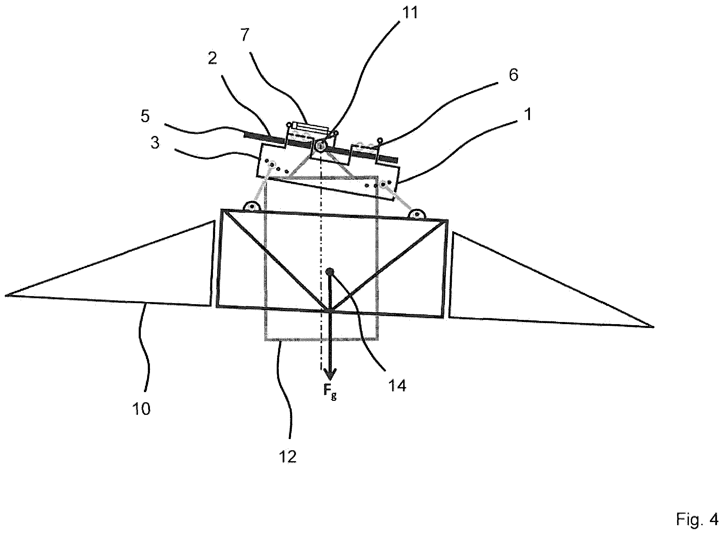

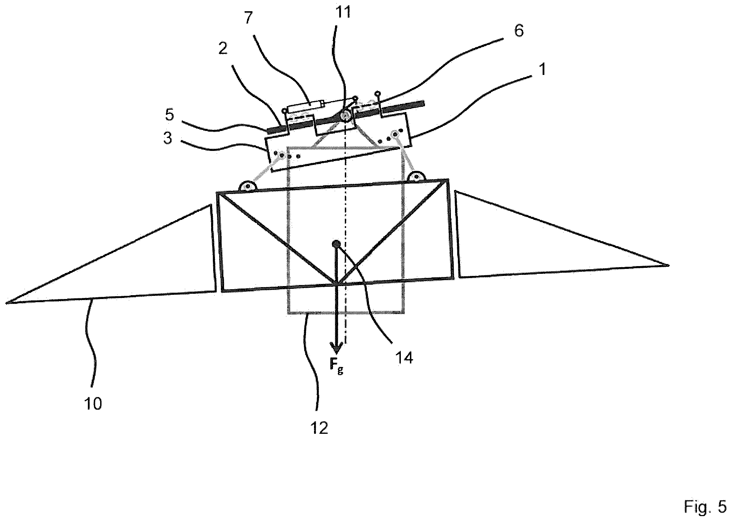

For balancing the boom 10 in an inclined position, the actuator 7 may be extended or retracted, resulting in a movement of the second sub-frame 3 relative to the first sub-frame 2 and the pivot point. The movement of the second sub-frame 3 relative to the pivot point causes the combined center of mass of all components supported by the ball joint 4 to move laterally out of the vertical position below the pivot point. When free rotation of the boom support frame 1 around the axle 11 is possible, the boom support frame 1 will rotate around the pivot point until the combined center of mass of all components supported by the ball joint 4 again lies vertically below the pivot point. This is illustrated in figures 4 and 5.

Fig. 4 shows the boom mounting assembly of Fig. 3 in which the actuator 7 has been retracted. The resulting movement of the second sub-frame 3 relative to the first sub-frame 2 has caused the rollers 6, and thereby the support sections, on the left side of the pivot point defined by the axle 11 in the plane of view of Fig. 4 to move closer to the pivot point along the transversely extending frame member 5 and the rollers 6 and support sections on the right side of the pivot point to move away from the pivot point, resulting in a shift of the combined center of mass 14 to the right. As a result, the boom support frame 1 and the boom 10 perform a clockwise rotating movement around the pivot point until the combined center of mass 14 again lies below the pivot point, resulting in an inclined position of the boom 10. In Fig. 4, the boom support frame 1 and the boom 10 have not completed the clockwise rotating movement around the pivot point. The boom 10 is in an inclined position, but the combined center of gravity 14 does not yet lie below the pivot point.

Fig. 5 shows the boom mounting assembly of Fig. 3 in which the actuator 7 has been extended. The resulting movement of the second sub-frame 3 relative to the first sub-frame 2 has caused the rollers 6, and thereby the support sections, on the right side of the pivot point defined by the axle 11 in the plane of view of Fig. 5 to move closer to the pivot point along the transversely extending frame member 5 and the rollers 6 and support sections on the left side of the pivot point to move away from the pivot point, resulting in a shift of the combined center of mass 14 to the left. As a result, the boom support frame 1 and the boom 10 perform a counterclockwise rotating movement around the pivot point until the combined center of mass 14 again lies below the pivot point, resulting in an inclined position of the boom 10. In Fig. 5, the boom support frame 1 and the boom 10 have not completed the counterclockwise rotating movement around the pivot point. The boom 10 is in an inclined position, but the combined center of gravity 14 does not yet lie below the pivot point.

In exemplary embodiments of the boom mounting assembly, rotation of the boom support frame 1 around the pivot point is limited to a pre-defined angular range. The angular range of rotation may be defined such that the likelihood of a collision of the outer sections 13 of the boom 10 is decreased, for example when agricultural machine is moving over ground with a steep inclination and the range of movement of the actuator 7, i.e. the range between a fully extended and a fully retracted position of the actuator 7, is not sufficient to achieve balancing of the boom 10 parallel to the ground.

The boom mounting assembly may further comprise a control unit functionally connected to the actuator 7 such that the actuator 7 can be operated by control signals provided by the control unit. Thereby, balancing of the boom 10 in an inclined position may be controlled by the control unit. The control signals may be generated in dependence on measurement signals, for example measurement signals that are indicative of an inclination angle of the ground. For example, the control unit may receive measurement signals indicative of an inclination angle from sensors that may be provided, for example, on the boom 10, and generate control signals in dependence on the measurement signals. The actuator 7 may then be operated according to the control signals to balance the boom 10 in inclined positions, for example according to Fig. 4 or Fig. 5.

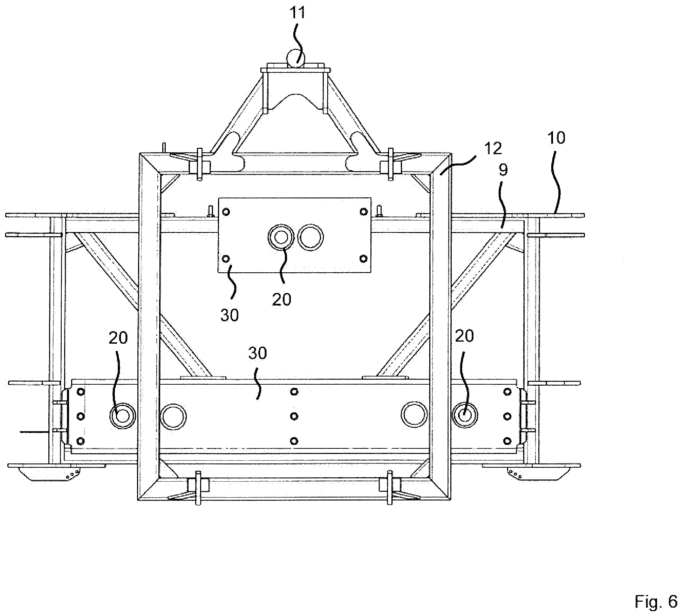

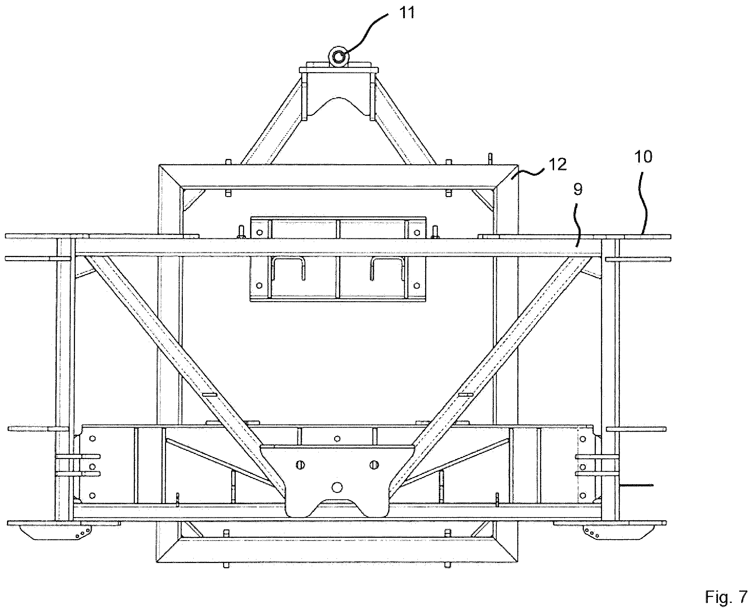

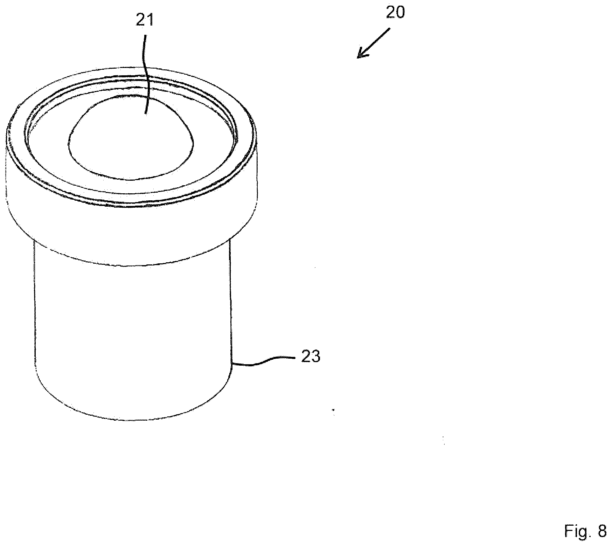

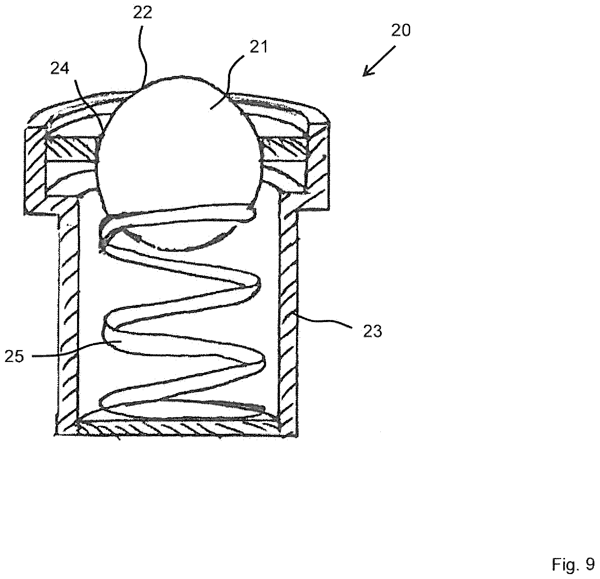

Figs. 6 and 7 show a schematic representation of elements of a boom mounting assembly. In particular, an example arrangement of a plurality of bearing assemblies 20 in the boom mounting assembly is shown. The bearing assemblies 20 will be described in more detail below with reference to Figs. 8 and 9. Figs. 6 and 7 show the primary frame 12 and the middle section of the boom 10 in a front view and back view, respectively. The boom support frame 1 is not shown. It will be appreciated that one or more bearing assemblies 20 may also be arranged between the primary frame 12 and the boom support frame 1.

The boom mounting assembly of this embodiment includes a plurality of bearing assemblies 20, more specifically six bearing assemblies 20, arranged in three pairs. One pair of the bearing assemblies 20 is arranged in an upper section of the primary frame 12, while two pairs of the bearing assemblies 20 are arranged in a lower section of the primary frame 12 to form a substantially triangular arrangement, It will be appreciated that the bearing assemblies may be arranged individually, i.e. not pairwise, or in groups of three, four or more, and in any total number as desired. At least some of the bearing assemblies 20 may be fixedly attached to the primary frame 12, such that the boom 10 can move relative to the bearing assemblies 20. In this case, the bearing assemblies 20 remain stationary with the primary frame 12. However, one or more of the bearing assemblies may be fixedly attached to the boom 10 such that they move relative to the primary frame 12.

The bearing assemblies 20 may face in opposite directions. More specifically, in each pair of bearing assemblies 20, one of the bearing assemblies 20 may face towards the primary frame 12, while the other one faces towards the boom 10. More specifically, a bearing surface of one of the bearing assemblies 20 faces towards the primary frame 12, while the bearing surface of the other one of the bearing assemblies 20 faces towards the boom 10. It will be appreciated that all bearing assemblies 20 may face in the same direction, in particular towards the boom 10 if all bearing assemblies 20 are attached to the primary frame 12. A bearing surface 22 (see Figs. 8 and 9) of each bearing assembly 20 rests against a respective counter surface 30 in operation of the boom mounting assembly. The counter surfaces 30 are flat and sufficiently large to allow movement of the respective bearing assemblies 20 thereon within a desired range in the transverse plane.

Figs. 8 and 9 show a bearing assembly 20 in more detail. The bearing assembly 20 comprises a bearing member 21 in the form of a ball received in a cylindrical housing 23. The bearing member 21 defines a bearing surface 22. The bearing member 21 extends through an opening 24 in the front face of the housing 23. The opening 24 may be formed e.g. by a locking ring such as a Seeger ring. The portion of the surface of the bearing member 21 which is disposed outside the housing 23 may be referred to as bearing surface 22. The bearing member 21 is a spherical ball such that the bearing surface 22 is part of a spherical surface. The convex bearing surface 22 allows for movement of the boom 10 relative to the primary frame 12 in a vertical direction as well as a horizontal direction in the transverse plane.

As can be seen in the cross-sectional view of Fig. 9, the bearing assembly 20 comprises a spring member 25 which biases the bearing member 21 towards the opening 24. The opening 24 has a smaller diameter than the bearing member 21 such that the bearing member 21 is retained in the opening 24. The bearing member 21 can move towards the inside of the housing 23 against the force of the spring member 25. Thus, the spring member 25 allows for movement of the bearing member 21 with one additional degree of freedom in a direction perpendicular to the transverse plane. Apart from that, the spring member 25 may equalize differences in a gap between the primary frame 12 and the boom 10 and also provides a damping effect.

The features disclosed in this specification, the figures and / or the claims may be material for the realization of various embodiments, taken in isolation or in various combinations thereof.

## Claims

1. A boom mounting assembly for attachment to an agricultural machine, comprising
- a primary frame (12);
- a boom support frame (1) configured to support a boom (10) and suspended from the primary frame (12) such that the boom support frame (1) can pivot at least in a transverse plane around a longitudinal axis of rotation provided in a pivot point; and
- at least one bearing assembly (20) provided on the primary frame (12) or the boom support frame (1) and configured for guiding a movement of the boom support frame (1) relative to the primary frame (12),
wherein the at least one bearing assembly (20) comprises a bearing member (21), the bearing member (21) defining a bearing surface (22) which is configured to rest detachably against at least one of the primary frame (12), the boom support frame (1), and a boom section of the boom (10), wherein the bearing surface (22) is convexly curved in any direction in the transverse plane.

2. The boom mounting assembly according to claim 1, wherein the at least one bearing assembly (20) allows movement of the boom support frame (1) relative to the primary frame (12) in any direction in the transverse plane.

3. The boom mounting assembly according to claim 1 or 2, wherein the bearing assembly (20) forms a roller bearing.

4. The boom mounting assembly according to any one of the preceding claims, wherein the bearing member (21) comprises a ball member having a substantially spherical surface, and the bearing surface (22) is defined by at least a portion of the substantially spherical surface (22) of the ball member (21).

5. The boom mounting assembly according to any one of the preceding claims, wherein the at least one bearing assembly (20) comprises a biasing member (25) configured to bias the bearing member (21) in a direction transverse to the transverse plane.

6. The boom mounting assembly according to any one of the preceding claims, wherein the at least one bearing assembly (20) comprises a housing (23), wherein the bearing member (21) is received in the housing (23).

7. The boom mounting assembly according to claim 6, wherein the bearing member (21) is freely rotatable in the housing (23) in any direction about a center of rotation.

8. The boom mounting assembly according to claim 6 or 7, wherein the housing (23) has an opening (24) and the bearing member (21) is received in the housing (23) such that it extends out of the opening (24) and a portion of a surface of the bearing member (21) extending out of the opening (24) forms the bearing surface (22).

9. The boom mounting assembly according to any one of claims 6 to 8, wherein the housing (23) is substantially cylindrical.

10. The boom mounting assembly according to any one of the preceding claims, comprising at least two of the bearing assemblies (20), the bearing assemblies (20) being arranged in pairs with the bearing surfaces (22) of the bearing members (21) of one pair facing in opposite directions with respect to the transverse plane.

11. The boom mounting assembly according to any one of the preceding claims, comprising at least three of the bearing assemblies (20), one of the bearing assemblies (20) being arranged in an upper section of the primary frame (12), and two of the bearing assemblies (20) being arranged in a lower section of the primary frame (12).

12. The boom mounting assembly according to claim 11, wherein the bearing assemblies (20) are arranged in a triangular arrangement, which is symmetrical with respect to a central vertical axis of the primary frame (12).

13. The boom mounting assembly according to any one of the preceding claims, wherein the at least one bearing assembly (20) is arranged in the primary frame (12) with the respective bearing surface (22) resting against a counter surface of the boom support frame (1) or a boom section of the boom (10).

14. The boom mounting assembly according to any one of the preceding claims, wherein the bearing surface (22) rests against a flat surface facing the bearing assembly (20).

15. The boom mounting assembly according to claim 14, wherein the flat surface is arranged on the boom support frame (1) or a boom section of the boom (10).

## Patentansprüche

1. Auslegerbefestigungsbaugruppe zur Befestigung an einer landwirtschaftlichen Maschine, aufweisend
- einen Hauptrahmen (12);
- einen Auslegertragrahmen (1), welcher eingerichtet ist, einen Ausleger (10) zu tragen, und welcher derart am Hauptrahmen (12) aufgehängt ist, dass der Auslegertragrahmen (1) in einer Querebene rund um eine Längsdrehachse, welche in einem Gelenkpunkt bereitgestellt ist, schwenkbar ist; und
- mindestens eine Lagerbaugruppe (20), welche am Hauptrahmen (12) oder am Auslegertragrahmen (1) bereitgestellt ist, und welche eingerichtet ist, eine Bewegung des Auslegertragrahmens (1) relativ zum Hauptrahmen (12) zu führen,
wobei die mindestens eine Lagerbaugruppe (20) ein Lagerelement (21) aufweist, wobei das Lagerelement (21) eine Lagerfläche (22) definiert, welche eingerichtet ist, lösbar zumindest an einem des Hauptrahmen (12), des Auslegertragrahmen (1) und eines Auslegerabschnitts des Auslegers (10) aufzuliegen, wobei die Lagerfläche (22) in einer beliebigen Richtung in der Querebene konvex gekrümmt ist.

2. Auslegerbefestigungsbaugruppe nach Anspruch 1, wobei die mindestens eine Lagerbaugruppe (20) eine Bewegung des Auslegertragrahmens (1) relativ zum Hauptrahmen (12) in einer beliebigen Richtung in der Querebene ermöglicht.

3. Auslegerbefestigungsbaugruppe nach Anspruch 1 oder 2, wobei die Lagerbaugruppe (20) ein Kugellager bildet.

4. Auslegerbefestigungsbaugruppe nach einem der vorstehenden Ansprüche, wobei das Lagerelement (21) ein Kugelelement mit einer im Wesentlichen kugelförmige Oberfläche umfasst, und die Lagerfläche (22) durch mindestens einen Abschnitt der im Wesentlichen kugelförmigen Oberfläche (22) des Kugelelements (21) definiert ist.

5. Auslegerbefestigungsbaugruppe nach einem der vorstehenden Ansprüche, wobei die mindestens eine Lagerbaugruppe (20) ein Vorspannelement (25) umfasst, welches eingerichtet ist, das Lagerelement (21) in einer Richtung quer zur Querebene vorzuspannen.

6. Auslegerbefestigungsbaugruppe nach einem der vorstehenden Ansprüche, wobei die mindestens eine Lagerbaugruppe (20) ein Gehäuse (23) aufweist, wobei das Lagerelement (21) im Gehäuse (23) aufgenommen ist.

7. Auslegerbefestigungsbaugruppe nach Anspruch 6, wobei das Lagerelement (21) im Gehäuse (23) um einen Drehmittelpunkt in jeder Richtung frei drehbar ist.

8. Auslegerbefestigungsbaugruppe nach Anspruch 6 oder 7, wobei das Gehäuse (23) eine Öffnung (24) aufweist, und das Lagerelement (21) im Gehäuse (23) derart aufgenommen ist, dass es sich aus dem Gehäuse (24) hinaus erstreckt und ein Abschnitt einer Fläche des Lagerelements (21), welcher sich aus dem Gehäuse (24) hinaus erstreckt, die Lagerfläche (22) bildet.

9. Auslegerbefestigungsbaugruppe nach einem der Ansprüche 6 bis 8, wobei das Gehäuse (23) im Wesentlichen zylindrisch ist.

10. Auslegerbefestigungsbaugruppe nach einem der vorstehenden Ansprüche, aufweisend mindestens zwei der Lagerbaugruppen (20), wobei die Lagerbaugruppen (20) paarweise derart angeordnet sind, dass die Lagerflächen (22) der Lagerelemente (21) eines Paares in Bezug auf die Querebene in entgegengesetzte Richtungen zeigen.

11. Auslegerbefestigungsbaugruppe nach einem der vorstehenden Ansprüche, aufweisend mindestens drei der Lagerbaugruppen (20), wobei eine der Lagerbaugruppen (20) in einem oberen Abschnitt des Hauptrahmens (12) angeordnet ist, und zwei der Lagerbaugruppen (20) in einem unteren Abschnitt des Hauptrahmens (12) angeordnet sind.

12. Auslegerbefestigungsbaugruppe nach Anspruch 11, wobei die Lagerbaugruppen (20) in einer dreieckigen Anordnung angeordnet sind, welche in Bezug auf eine vertikale Mittelachse des Hauptrahmens (12) symmetrisch angeordnet ist.

13. Auslegerbefestigungsbaugruppe nach einem der vorstehenden Ansprüche, wobei die mindestens eine Lagerbaugruppe (20) im Hauptrahmen (12) derart angeordnet ist, dass die betreffende Lagerfläche (22) an einer Gegenfläche des Auslegertragrahmens (1) oder einem Auslegerabschnitt des Auslegers (10) aufliegt.

14. Auslegerbefestigungsbaugruppe nach einem der vorstehenden Ansprüche, wobei die Lagerfläche (22) an einer ebenen Fläche, welche zur Lagerbaugruppe (20) zeigt, aufliegt.

15. Auslegerbefestigungsbaugruppe nach Anspruch 14, wobei die ebene Fläche am Auslegertragrahmen (1) oder einem Auslegerabschnitt des Auslegers (10) angeordnet ist.

## Revendications

1. Ensemble de montage de rampe pour la fixation à une machine agricole, comprenant
- un cadre principal (12) ;
- un cadre de support de rampe (1) configuré pour supporter une rampe (10) et suspendu au cadre principal (12) de manière à ce que le cadre de support de rampe (1) puisse pivoter au moins dans un plan transversal autour d'un axe de rotation longitudinal fourni en un point de pivotement ; et
- au moins un ensemble palier (20) fourni sur le cadre principal (12) ou le cadre de support de rampe (1) et configuré pour guider un mouvement du cadre de support de rampe (1) par rapport au cadre principal (12),
dans lequel l'au moins un ensemble palier (20) comprend un élément de roulement (21), l'élément de roulement (21) définissant une surface de roulement (22) configurée pour reposer de manière détachable contre au moins l'un parmi le cadre principal (12), le cadre de support de rampe (1) et une section de rampe de la rampe (10), dans lequel la surface de roulement (22) est incurvée de manière convexe dans n'importe quelle direction dans le plan transversal.

2. Ensemble de montage de rampe selon la revendication 1, dans lequel l'au moins un ensemble palier (20) permet le mouvement du cadre de support de rampe (1) par rapport au cadre principal (12) dans n'importe quelle direction dans le plan transversal.

3. Ensemble de montage de rampe selon la revendication 1 ou 2, dans lequel l'ensemble palier (20) forme un roulement à rouleaux.

4. Ensemble de montage de rampe selon l'une quelconque des revendications précédentes, dans lequel l'élément de roulement (21) comprend un élément de bille ayant une surface sensiblement sphérique, et la surface de roulement (22) est définie par au moins une partie de la surface sensiblement sphérique (22) de l'élément de bille (21).

5. Ensemble de montage de rampe selon l'une quelconque des revendications précédentes, dans lequel l'au moins un ensemble palier (20) comprend un élément de sollicitation (25) configuré pour solliciter l'élément de roulement (21) dans une direction transversale au plan transversal.

6. Ensemble de montage de rampe selon l'une quelconque des revendications précédentes, dans lequel l'au moins un ensemble palier (20) comprend un logement (23), dans lequel l'élément de roulement (21) est réceptionné dans le logement (23).

7. Ensemble de montage de rampe selon la revendication 6, dans lequel l'élément de roulement (21) est librement rotatif dans le logement (23) dans n'importe quelle direction autour d'un centre de rotation.

8. Ensemble de montage de rampe selon la revendication 6 ou 7, dans lequel le logement (23) a une ouverture (24) et l'élément de roulement (21) est reçu dans le logement (23) de manière à s'étendre hors de l'ouverture (24) et une partie d'une surface de l'élément de roulement (21) s'étendant hors de l'ouverture (24) forme la surface de roulement (22).

9. Ensemble de montage de rampe selon l'une quelconque des revendications 6 à 8, dans lequel le logement (23) est sensiblement cylindrique.

10. Ensemble de montage de rampe selon l'une quelconque des revendications précédentes, comprenant au moins deux des ensembles palier (20), les ensembles palier (20) étant disposés par paires avec les surfaces de roulement (22) des éléments de roulement (21) d'une paire tournées dans des directions opposées par rapport au plan transversal.

11. Ensemble de montage de rampe selon l'une quelconque des revendications précédentes, comprenant au moins trois des ensembles palier (20), l'un des ensembles palier (20) étant disposé au niveau d'une section supérieure du cadre principal (12) et deux des ensembles palier (20) étant disposés au niveau d'une section inférieure du cadre principal (12).

12. Ensemble de montage de rampe selon la revendication 11, dans lequel les ensembles palier (20) sont disposés selon un agencement triangulaire qui est symétrique par rapport à un axe vertical central du cadre principal (12).

13. Ensemble de montage de rampe selon l'une quelconque des revendications précédentes, dans lequel l'au moins un ensemble palier (20) est disposé au niveau du cadre principal (12) par rapport à la surface de roulement (22) reposant contre une contre-surface du cadre de support de rampe (1) ou une section de rampe de la rampe (10).

14. Ensemble de montage de rampe selon l'une quelconque des revendications précédentes, dans lequel la surface de roulement (22) repose contre une surface plate tournée vers l'ensemble palier (20).

15. Ensemble de montage de rampe selon la revendication 14, dans lequel la surface plate est disposée sur le cadre de support de rampe (1) ou une section de rampe de la rampe (10).
